# EUROPEAN PATENT APPLICATION

(11) **EP 4 455 765 A1**
(43) Date of publication of application: **30.10.2024**
(21) Application number: 24172237.0
(22) Date of filing: 24.04.2024
(51) Int. Cl.: G02B 27/01

(54) **OPTICAL ELEMENT AND OPTICAL DEVICE**

(30) Priority: 25.04.2023 US 202363498015 P
(71) Applicant: HTC Corporation, Taoyuan City 330, (TW)
(72) Inventor: DENG, Qing-Long, 330 Taoyuan City (TW)
(74) Representative: Klang, Alexander H.

(57) **Abstract**

An optical element includes a holographic pinhole array. The holographic pinhole array includes a plurality of holographic pinhole grating sets. The holographic pinhole grating sets are configured to diffract light incident on the optical element into a plurality of light beams respectively. Each of the light beams has a field of view.

## Description

### BACKGROUND

### Technical Field

The present disclosure relates to an optical element and an optical device.

### Description of Related Art

Traditional light field integral imaging technology can be divided into two types, and one of which is the micro lens array type. This type uses a micro lens array to be placed in front of the display panel. Each micro lens on the micro lens array can correspond to a fixed range of pixel area, and each group of the pixel areas represents image information from different angles. Therefore, when the image information from different angles is projected through the micro lens array, an integral image of a compound eye will be generated on the focal plane. At this time, the human eye can reconstruct this integral image to the retina through physiological structures such as the crystalline lens, and then use monocular accommodation to distinguish depth perception. This type is easy to achieve a three-dimensional imaging effect, but the characteristics of the micro lens will cause serious color dispersion and distortion due to the deviation of the viewing angle, thus causing viewing restrictions and discomfort.

The other type is the pinhole array type. Pinholes can be divided into reflective pinholes, such as micro mirrors, and transmissive pinholes, such as micro pinholes. Each pinhole corresponds to a fixed range of pixel area, and each group of the pixel areas represents image information from different angles. At this time, information images from different angles will penetrate and propagate in straight lines through the corresponding pinholes, and the human eye will then use monocular accommodation to distinguish the depth perception of compound eye images. Although the pinhole array type integral imaging does not have the defects of color cast and distortion, the pinhole characteristics must have an opaque area. If used on a transparent augmented reality device, the non-pinhole area of the transmissive pinhole array is an opaque mask, and the blocked part will block the background and reduce the brightness of the image. When using the reflective pinhole array, an opaque pinhole mirror array also has the problem of blocking the background.

Accordingly, it is an important issue for the industry to provide an optical element and an optical device to solve the aforementioned problems.

### SUMMARY

An aspect of the disclosure is to provide an optical element and an optical device that can efficiently solve the aforementioned problems.

According to an embodiment of the disclosure, an optical element includes a holographic pinhole array. The holographic pinhole array includes a plurality of holographic pinhole grating sets. The holographic pinhole grating sets are configured to diffract light incident on the optical element into a plurality of light beams respectively. Each of the light beams has a field of view.

In an embodiment of the disclosure, the optical element has a surface. The light diffracted by the holographic pinhole grating sets is incident on the surface, and the light beams propagate and leave the optical element from the surface.

In an embodiment of the disclosure, the optical element has a first surface and a second surface opposite to each other. The light diffracted by the holographic pinhole grating sets is incident on the first surface, and the light beams propagate and leave the optical element from the second surface.

In an embodiment of the disclosure, the holographic pinhole grating sets are volume holographic gratings.

In an embodiment of the disclosure, the holographic pinhole grating sets are surface relief diffraction gratings.

In an embodiment of the disclosure, the holographic pinhole grating sets are liquid crystal gratings.

In an embodiment of the disclosure, the light diffracted by the holographic pinhole grating sets is collimated light.

In an embodiment of the disclosure, the light diffracted by the holographic pinhole grating sets has another field of view.

According to an embodiment of the disclosure, an optical device includes an optical element and a light-emitting element. The optical element includes a holographic pinhole array. The holographic pinhole array includes a plurality of holographic pinhole grating sets. The light-emitting element is configured to emit light toward the optical element. The holographic pinhole grating sets are configured to diffract the light into a plurality of light beams respectively. Each of the light beams has a field of view.

In an embodiment of the disclosure, the optical element has a surface. The light diffracted by the holographic pinhole grating sets is incident on the surface, and the light beams propagate and leave the optical element from the surface.

In an embodiment of the disclosure, the optical element has a first surface and a second surface opposite to each other. The light diffracted by the holographic pinhole grating sets is incident on the first surface, and the light beams propagate and leave the optical element from the second surface.

In an embodiment of the disclosure, the holographic pinhole grating sets are volume holographic gratings.

In an embodiment of the disclosure, the holographic pinhole grating sets are surface relief diffraction gratings.

In an embodiment of the disclosure, the holographic pinhole grating sets are liquid crystal gratings.

In an embodiment of the disclosure, the light diffracted by the holographic pinhole grating sets is collimated light.

In an embodiment of the disclosure, the optical device further includes a temple. The temple is connected to an edge of the optical element. The light-emitting element is disposed on a side of the temple adjacent to the optical element.

In an embodiment of the disclosure, the light-emitting element is configured to sequentially emit the light toward the holographic pinhole grating sets.

In an embodiment of the disclosure, the light-emitting element includes a projector and a lens module. The lens module is optically coupled between the projector and the optical element.

In an embodiment of the disclosure, the light diffracted by the holographic pinhole grating sets has another field of view.

In an embodiment of the disclosure, the optical device further includes a temple. The temple is connected to an edge of the optical element. The light-emitting element is disposed on a side of the temple adjacent to the optical element. The light-emitting element includes a display and a field lens. The field lens is optically coupled between the display and the optical element.

Accordingly, in the optical element and the optical device of the present disclosure, the holographic pinhole grating sets of the holographic pinhole array are configured to diffract light incident on the optical element into a plurality of light beams respectively, and each of the light beams has a field of view. Since it is manufactured using holographic grating technology, the holographic pinhole array has pinhole imaging characteristics and high light transmission characteristics at the same time. Therefore, in addition to replacing the traditional microlens arrays, the holographic pinhole array can also be used to replace the traditional pinhole arrays of which the opaque mask areas will reduce at least half of image brightness and cause the ghosting problems.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a schematic view of an optical element according to some embodiments of the present disclosure;
Fig. 2 is a schematic diagram illustrating using the optical element in Fig. 1 to diffract light according to some embodiments of the present disclosure;
Fig. 3 is a partial schematic view of the optical element in Fig. 2;
Fig. 4 is a schematic diagram illustrating an optical exposure system for manufacturing the optical element in Fig. 2 according to some embodiments of the present disclosure;
Fig. 5 is a partial schematic view of an optical element according to some embodiments of the present disclosure;
Fig. 6 is a partial schematic view of an optical element according to some embodiments of the present disclosure;
Fig. 7 is a schematic diagram illustrating using an optical element to diffract light according to some embodiments of the present disclosure;
Fig. 8 is a schematic diagram illustrating an optical exposure system for manufacturing the optical element in Fig. 7 according to some embodiments of the present disclosure;
Fig. 9 is a schematic view of an optical device according to some embodiments of the present disclosure;
Fig. 10 is a schematic view of an optical device according to some embodiments of the present disclosure; and
Fig. 11 is a schematic view of an optical device according to some embodiments of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

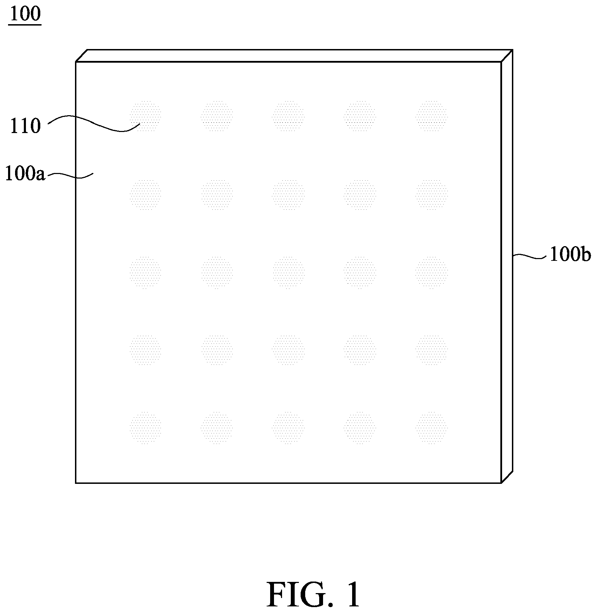

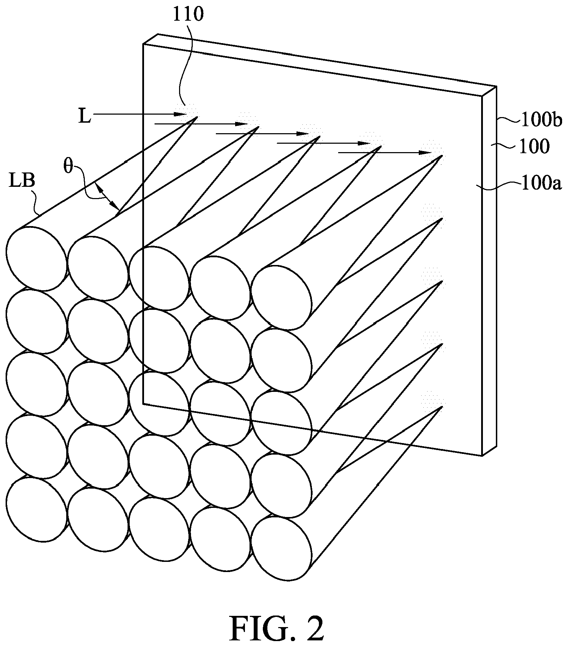

Reference is made to Figs. 1 and 2. Fig. 1 is a schematic view of an optical element 100 according to some embodiments of the present disclosure. Fig. 2 is a schematic diagram illustrating using the optical element 100 in Fig. 1 to diffract light according to some embodiments of the present disclosure. As shown in Figs. 1 and 2, the optical element 100 includes a holographic pinhole array. The holographic pinhole array includes a plurality of holographic pinhole grating sets 110. The holographic pinhole grating sets 110 are configured to diffract light L incident on the optical element 100 into a plurality of light beams LB respectively. Each of the light beams LB has a field of view θ. Specifically, the light L diffracted by the holographic pinhole grating sets 110 is collimated light (i.e., infinite light). In other words, the holographic pinhole grating sets 110 of the holographic pinhole array are Fraunhofer type diffraction gratings which are configured to diffract infinite light (i.e., a plane wave).

As shown in Fig. 2, in the present embodiment, the optical element 100 has a surface 100a. The light L diffracted by the holographic pinhole grating sets 110 is incident on the surface 100a, and the light beams LB propagate and leave the optical element 100 from the surface 100a. In other words, the holographic pinhole array of the optical element 100 is a reflective holographic pinhole array.

In some other embodiments, the holographic pinhole array of the optical element 100 may be a transmissive holographic pinhole array. For example, with reference to Fig. 2, the optical element 100 has surfaces 100a, 100b respectively on opposite sides of the optical element 100. After being incident on the surface 100a, the light L will be diffracted by the holographic pinhole grating sets110 into light beams LB that propagate and leave the optical element 100 from the surface 100b.

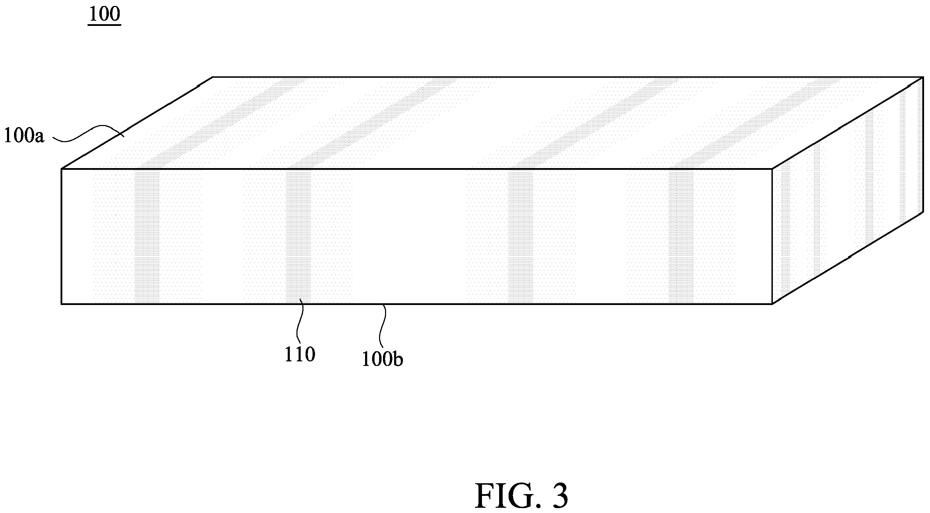

Reference is made to Fig. 3. Fig. 3 is a partial schematic view of the optical element 100 in Fig. 2. As shown in Fig. 3, in the present embodiments, the holographic pinhole grating sets 110 of the holographic pinhole array are volume holographic gratings. It is notable that light diffracted by a volume holographic grating can propagate based on the Bragg's law.

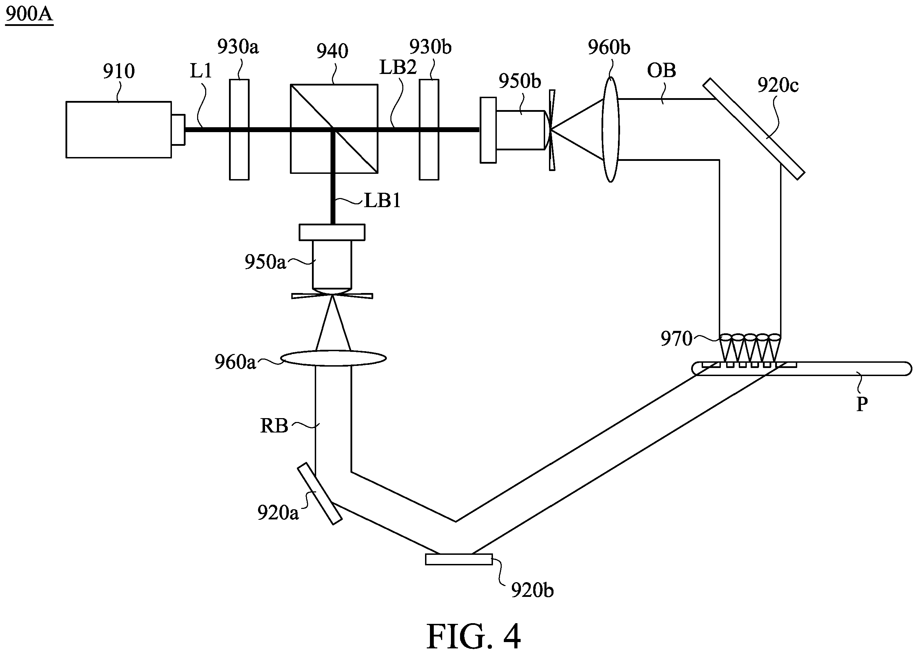

Reference is made to Fig. 4. Fig. 4 is a schematic diagram illustrating an optical exposure system 900A for manufacturing the optical element 100 in Fig. 2 according to some embodiments of the present disclosure. It should be pointed out that the optical exposure system 900A is used to manufacture the optical element 100 of which the holographic pinhole grating sets 110 are volume holographic gratings. As shown in Fig. 4, the optical exposure system 900A includes a light sources 910 configured to emit light L1. In some embodiments, the wavelength band of the light L1 projected by the light source 910 is about 633 nm (i.e., red light), but the disclosure is not limited in this regard. In some embodiments, the wavelength band of the light L1 projected by the light source 910 is about 532 nm (i.e., green light), but the disclosure is not limited in this regard. In some embodiments, the wavelength band of the light L1 projected by the light source 910 is about 457 nm (i.e., blue light), but the disclosure is not limited in this regard. In some embodiments, the light source 910 may be a laser diode, but the disclosure is not limited in this regard.

As shown in Fig. 4, the optical exposure system 900A further includes three mirrors 920a, 920b, 920c, two half-wave plates 930a, 930b, a polarizing beam splitter 940, two spatial filters 950a, 950b, two lenses 960a, 960b, and a lens array 970. The lens array 970 is placed above a photopolymer P. The light L1 projected by the light source 910 reaches the polarizing beam splitter 940 through the two half-wave plate 930a, and the light L1 is divided into two light beams LB1, LB2 by the polarizing beam splitter 940. The light beam LB1 sequentially propagate through the spatial filter 950a and the lens 960a to become a reference beam RB. The reference beam RB is sequentially reflected by the mirrors 920a, 920b to be incident on a side of the photopolymer P. The light beam LB2 sequentially propagate through the half-wave plate 930b, the spatial filter 950a, and the lens 960b to become an object beam OB. The object beam OB is reflected by the mirror 920c to the lens array 970, and then focused by the lens array 970 to be incident on another side of the photopolymer P.

In other words, the optical exposure system 900A is configured to expose the photopolymer P with two light beams (i.e., the reference beam RB and the object beam OB) in difference incidence directions from opposite sides of the photopolymer P. The photopolymer P includes monomer, polymer, photo-initiator, and binder. When the photopolymer P is subjected to an exposure process, the photo-initiator receives photons to generate radicals, so that the monomers begin to polymerize (i.e., photopolymerization). By using the exposure method of hologram interference fringe, the monomer that is not illuminated by the light (i.e., in dark zone) is diffused to the light recording zone (i.e., bright zone) and polymerized, thereby causing a non-uniform concentration gradient of the polymer. And finally, after fixing, phase gratings (i.e., the holographic pinhole grating sets 110) each including bright and dark stripes arranged in a staggered manner can be formed, and the photopolymer P is transformed to the optical element 100 in Fig. 2.

In other words, the optical exposure system 900A uses interference exposure and development to polymerize or diffuse the photopolymer P to form periodic structures in the optical element 100. In this way, the optical element 100 uses the internal bright and dark stripes to form width periodic structures, and the surfaces 100a, 100b of the optical element 100 have no solid structure. It should be pointed out that the dark stripes (i.e., the holographic pinhole grating sets 110) in the optical element 100 have high translucency, and the areas other than the dark stripes are transparent. In this regard, the holographic pinhole array of the optical element 100 can also be used to replace the traditional pinhole arrays of which the opaque mask areas will reduce at least half of image brightness and cause the ghosting problems.

It should be pointed out that the reference beam RB is collimated light, so that the holographic pinhole grating sets 110 formed in the optical element 100 is configured to diffract the light L which is also collimated light.

In some embodiments, a volume holographic grating can form a transmissive holographic grating or a reflective holographic grating according to different fabrication methods. Specifically, as shown in Fig. 4, by exposing the photopolymer P with the reference beam RB and the object beam OB respectively in difference incidence directions from opposite sides of the photopolymer P, the optical element 100 can be fabricated as a reflective holographic element (i.e., the holographic pinhole grating sets 110 are reflective holographic gratings). In some embodiments, by exposing the photopolymer P with light beams in difference incidence directions from the same side of the photopolymer P (the optical path of the optical exposure system 900 as shown in Fig. 4 needs to be modified), the optical element 100 can be fabricated as a transmissive holographic element (i.e., holographic pinhole grating sets 110 are transmissive holographic gratings).

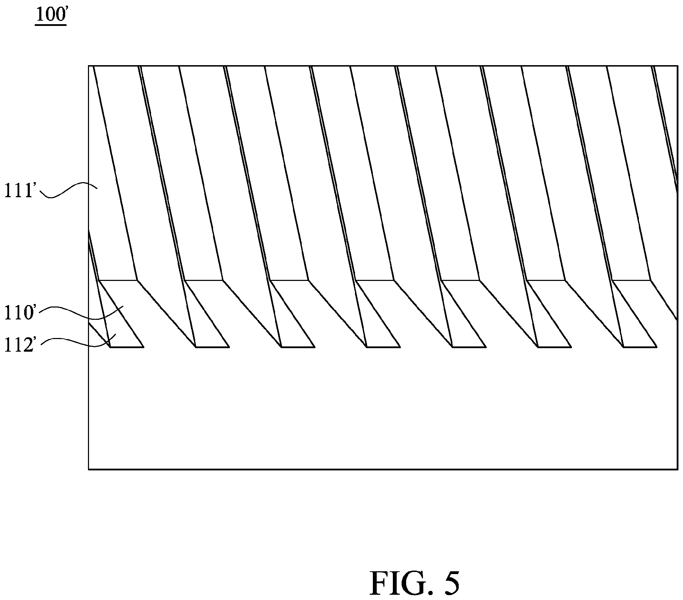

Reference is made to Fig. 5. Fig. 5 is a partial schematic view of an optical element 100' according to some embodiments of the present disclosure. As shown in Fig. 5, the optical element 100' includes a plurality of surface structures 110'. The optical element 100' uses convex top surfaces 111' and concave bottom surfaces 112' of the surface structures 110' to form width periodic structures. The surface structures 110' may be manufactured to form surface relief diffraction gratings, and the surface relief diffraction gratings may form holographic pinhole grating sets of a holographic pinhole array. In this way, the diffraction characteristics of the holographic pinhole array of the optical element 100 formed by the volume holographic gratings may be identical or similar to the diffraction characteristics of the holographic pinhole array of the optical element 100' formed by the surface relief diffraction gratings.

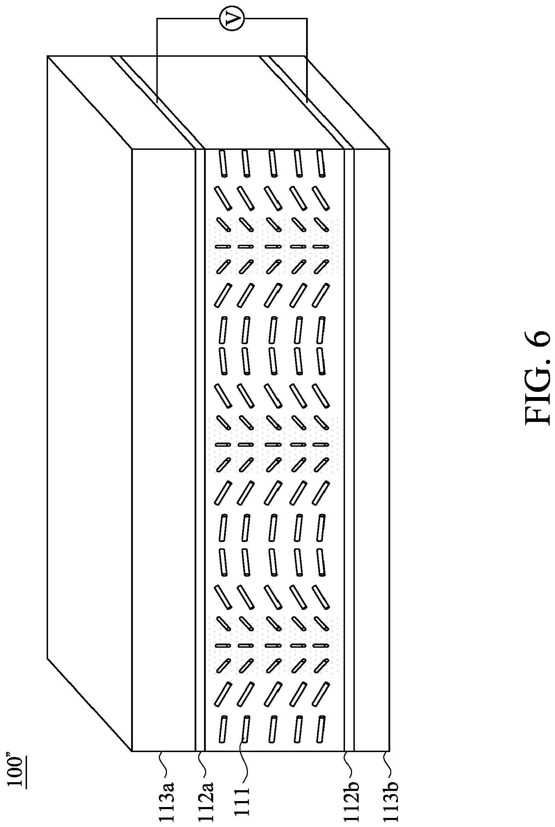

Reference is made to Fig. 6. Fig. 6 is a partial schematic view of an optical element 100" according to some embodiments of the present disclosure. As shown in Fig. 6, the optical element 100" includes a plurality of liquid crystal molecules 111 disposed between two photo-alignment layers 112a, 112b, and the photo-alignment layers 112a, 112b are sandwiched between two substrates 113a, 113b. A voltage may be applied to the photo-alignment layers 112a, 112b to rotate the liquid crystal molecules 111 to form width periodic structures. In other words, the optical element 100" uses the internal liquid crystal molecules 111 to form width periodic structures, so outer surfaces of the substrates 113a, 113b have no solid structure. The rotated liquid crystal molecules 111 may form liquid crystal gratings, and the liquid crystal gratings may form holographic pinhole grating sets of a holographic pinhole array. In this way, the diffraction characteristics of the holographic pinhole array of the optical element 100 formed by the volume holographic gratings may be identical or similar to the diffraction characteristics of the holographic pinhole array of the optical element 100" formed by the liquid crystal gratings.

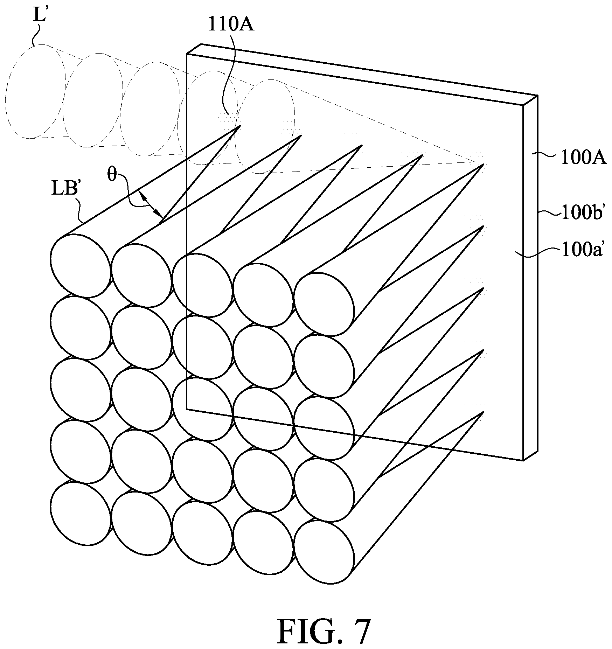

Reference is made to Fig. 7. Fig. 7 is a schematic diagram illustrating using an optical element 100A to diffract light according to some embodiments of the present disclosure. As shown in Fig. 7, the optical element 100A includes a holographic pinhole array. The holographic pinhole array includes a plurality of holographic pinhole grating sets 110A. The holographic pinhole grating sets 110A are configured to diffract light L' incident on the optical element 100A into a plurality of light beams LB' respectively. Each of the light beams LB' has a field of view θ. Specifically, the light L' diffracted by the holographic pinhole grating sets 110A has another field of view. That is the light L' diffracted by the holographic pinhole grating sets 110A is non-collimated light (i.e., finite light). In other words, the holographic pinhole grating sets 110A of the holographic pinhole array are Fresnel type diffraction gratings which are configured to diffract finite light (i.e., a spherical wave).

As shown in Fig. 7, in the present embodiment, the optical element 100A has a surface 100a'. The light L' diffracted by the holographic pinhole grating sets 110A is incident on the surface 100a', and the light beams LB' propagate and leave the optical element 100A from the surface 100a'. In other words, the holographic pinhole array of the optical element 100A is a reflective holographic pinhole array.

In some other embodiments, the holographic pinhole array of the optical element 100A may be a transmissive holographic pinhole array. For example, with reference to Fig. 7, the optical element 100A has surfaces 100a', 100b' respectively on opposite sides of the optical element 100A. After being incident on the surface 100a', the light L' will be diffracted by the holographic pinhole grating sets110A into light beams LB' that propagate and leave the optical element 100A from the surface 100b'.

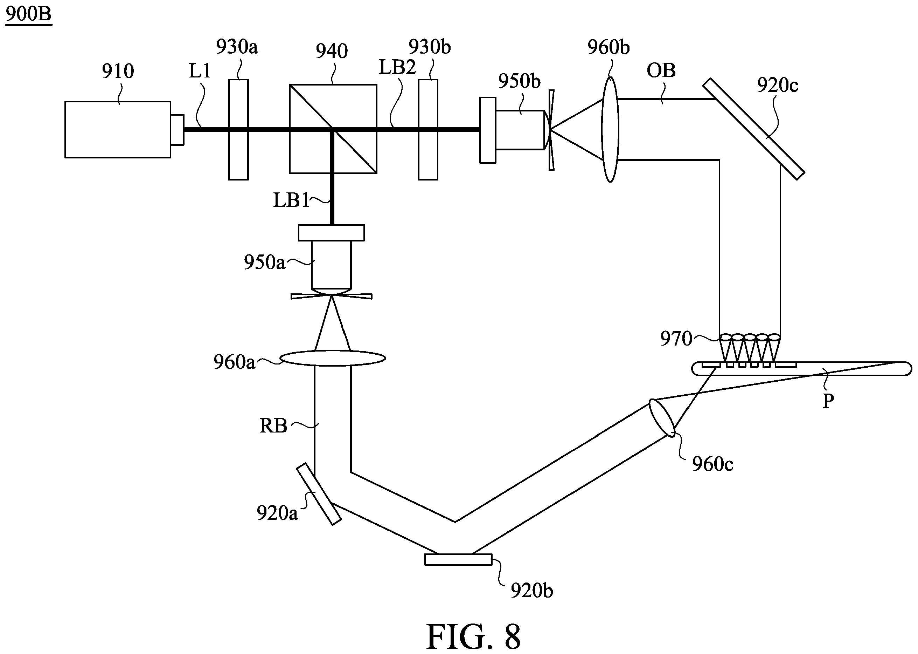

Reference is made to Fig. 8. Fig. 8 is a schematic diagram illustrating an optical exposure system 900B for manufacturing the optical element 100A in Fig. 7 according to some embodiments of the present disclosure. It should be pointed out that the optical exposure system 900B is used to manufacture the optical element 100A of which the holographic pinhole grating sets 110A are volume holographic gratings. As shown in Fig. 4, the optical exposure system 900B includes a light sources 910, three mirrors 920a, 920b, 920c, two half-wave plates 930a, 930b, a polarizing beam splitter 940, two spatial filters 950a, 950b, two lenses 960a, 960b, and a lens array 970. These components are identical to those of the optical exposure system 900A as shown in Fig. 4, so connection relationships and functions of these components can be referred to above relative descriptions and will not be repeated here for simplicity. Compared with the optical exposure system 900A as shown in Fig. 4, the optical exposure system 900B as shown in Fig. 8 further includes a lens 960c. The lens 960c is optically coupled between the mirror 920b and the photopolymer P, so that the reference beam RB reflected by the mirror 920b propagates through the lens 960c to be incident on a side of the photopolymer P. It should be pointed out that the reference beam RB is collimated light, and the lens 960c is configured to converge the reference beam RB to be incident on the photopolymer P, so that the holographic pinhole grating sets 110A formed in the optical element 100A is configured to diffract the light L' which is also non-collimated light. As a result, both the object beam OB focused by the lens array 970 and the reference beam RB converged by the lens 960c are non-collimated light.

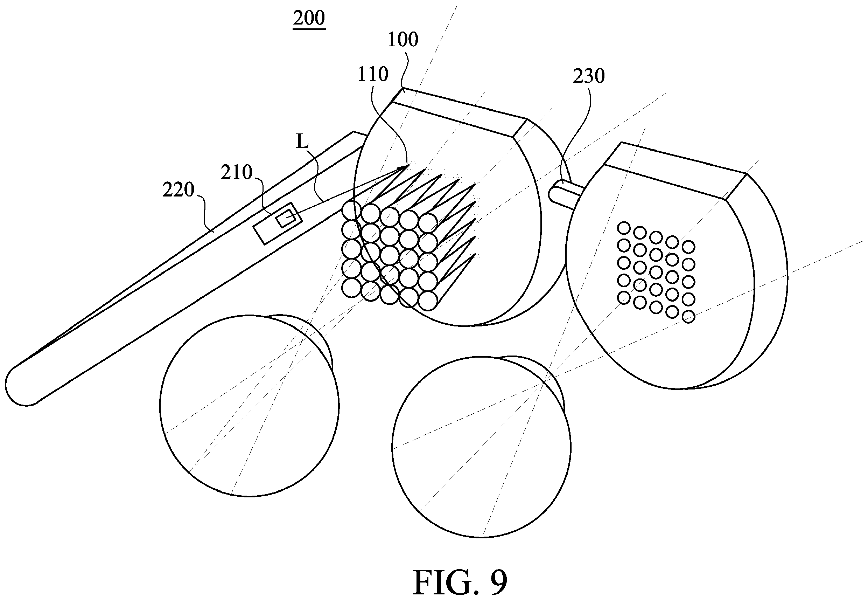

Reference is made to Fig. 9. Fig. 9 is a schematic view of an optical device 200 according to some embodiments of the present disclosure. As shown in Fig. 9, the optical device 200 may be used in an augmented reality device which can be implemented as, but is not limited thereto, a pair of glasses or other wearable display devices, so that light field integral image can be completed. Specifically, the optical device 200 includes two optical elements 100, a light-emitting element 210, a temple 220, and a connecting member 230. The structures and functions of each of the optical elements 100 are identical to those of the optical element 100 as shown in Fig. 2. That is, the holographic pinhole grating sets 110 of the optical elements 100 are Fraunhofer type diffraction gratings. The connecting member 230 is connected between the optical elements 100. The temple 220 is connected to an edge of one of the optical elements 100. The light-emitting element 210 is disposed on a side of the temple 220 adjacent to the one of optical elements 100. The light-emitting element 210 is configured to sequentially emit light (e.g., light field information image) toward the holographic pinhole grating sets 110. The holographic pinhole grating sets 110 then sequentially reconstructs spherical wavefronts (i.e., sequential light field). When the human eye receives the wavefronts sequentially reconstructed by the holographic pinhole grating sets 110, it can use monocular accommodation to distinguish the depth perception of compound eye images.

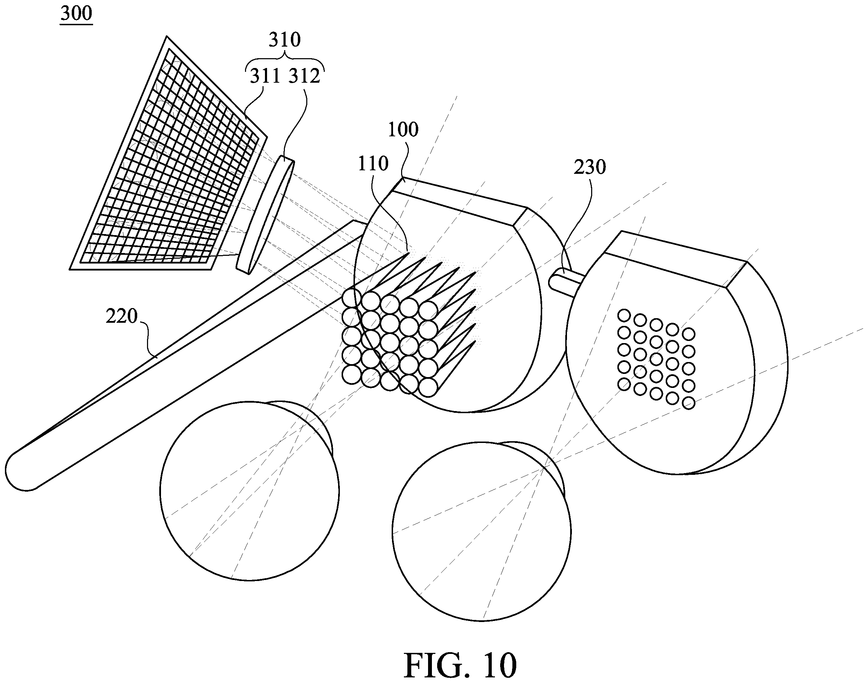

Reference is made to Fig. 10. Fig. 10 is a schematic view of an optical device 300 according to some embodiments of the present disclosure. As shown in Fig. 10, the optical device 300 may be used in an augmented reality device which can be implemented as, but is not limited thereto, a pair of glasses or other wearable display devices, so that light field integral image can be completed. Specifically, the optical device 300 includes two optical elements 100A, a light-emitting element 310, a temple 220, and a connecting member 230. The structures and functions of each of the optical elements 100A are identical to those of the optical element 100A as shown in Fig. 7. That is, the holographic pinhole grating sets 110A of the optical elements 100 are Fresnel type diffraction gratings. The connecting member 230 is connected between the optical elements 100. The temple 220 is connected to an edge of one of the optical elements 100. The light-emitting element 310 is disposed on a side of the temple 220 adjacent to the one of optical elements 100. In order to present clearly, the light-emitting element 310 is enlarged and separated from the temple 220. The light-emitting element 310 includes a display 311 and a field lens 312. The display 311 is configured to present a light field information image. The field lens 312 is optically coupled between the display 311 and the optical element 100A. The field lens 312 is configured to enlarge the virtual image presented by the display 311 and respectively correspond pixels of compound eye images to the holographic pinhole grating sets 110A. When the display 311 presents the light field information image, the compound eye image of each pixel will propagate to the corresponding holographic pinhole grating set 110A and be reconstructed as a spherical wavefront (i.e., spatial light field), and then the human eye can use monocular accommodation to distinguish the depth perception of the compound eye images.

In some embodiments, the display 311 is a flat panel display, such as a LCD display, an OLEDoS display, or a LEDoS display, but the present disclosure is not limited in this regard. In practical applications, there are many different forms of augmented reality devices using the display 311, such as birdbath optical modules, freeform lens optical modules, or total internal reflection birdbath optical modules, etc.

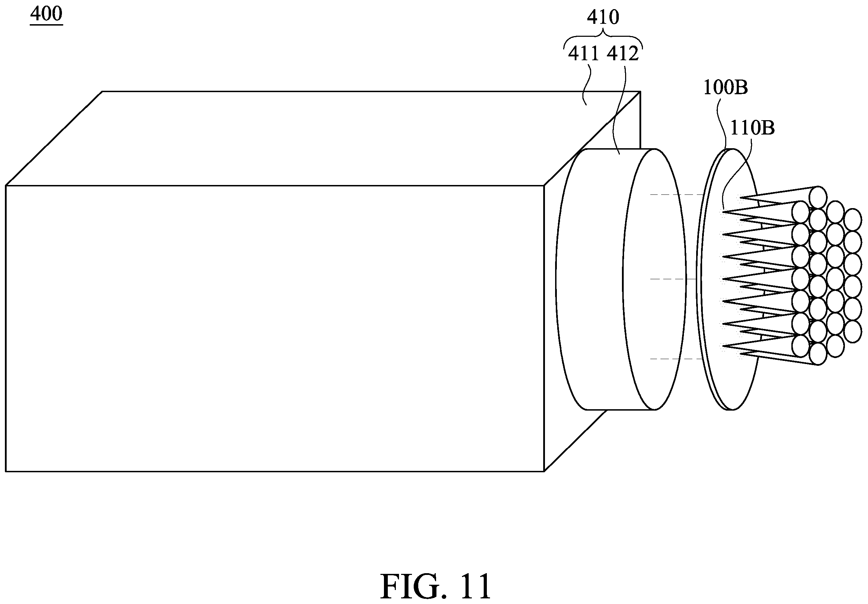

Reference is made to Fig. 11. Fig. 11 is a schematic view of an optical device 400 according to some embodiments of the present disclosure. As shown in Fig. 11, the optical device 400 includes an optical element 100B and a light-emitting assembly 410. The optical element 100B includes a holographic pinhole array. The holographic pinhole array includes a plurality of holographic pinhole grating sets 110B. The light-emitting assembly 410 includes a projector 411 and a lens module 412. The projector 411 is configured to project light toward the optical element 100B via the lens module 412. The holographic pinhole grating sets 110B are configured to diffract the light propagated from the lens module 412 into a plurality of light beams respectively. Each of the light beams has a field of view. Specifically, the holographic pinhole array of the optical element 100B is a transmissive holographic pinhole array. In this way, after the light propagated from the lens module 412 is incident on a side of the optical element 100B facing the light-emitting assembly 410, the light will be diffracted by the holographic pinhole grating sets1 10 into light beams LB that propagate and leave the optical element 100B from another side of the optical element 100B facing away from the light-emitting assembly 410. By projecting the light to propagate through the optical element 100B, the spherical waves formed by the holographic pinhole grating sets 110B can be reconstructed to achieve the effect of light field projection.

According to the foregoing recitations of the embodiments of the disclosure, it can be seen that in the optical element and the optical device of the present disclosure, the holographic pinhole grating sets of the holographic pinhole array are configured to diffract light incident on the optical element into a plurality of light beams respectively, and each of the light beams has a field of view. Since it is manufactured using holographic grating technology, the holographic pinhole array has pinhole imaging characteristics and high light transmission characteristics at the same time. Therefore, in addition to replacing the traditional microlens arrays, the holographic pinhole array can also be used to replace the traditional pinhole arrays of which the opaque mask areas will reduce at least half of image brightness and cause the ghosting problems.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. An optical element comprising a holographic pinhole array, wherein the holographic pinhole array comprises a plurality of holographic pinhole grating sets, the holographic pinhole grating sets are configured to diffract light incident on the optical element into a plurality of light beams respectively, and each of the light beams has a field of view.

2. The optical element of claim 1, wherein the optical element has a surface, the light diffracted by the holographic pinhole grating sets is incident on the surface, and the light beams propagate and leave the optical element from the surface.

3. The optical element of claim 1, wherein the optical element has a first surface and a second surface opposite to each other, the light diffracted by the holographic pinhole grating sets is incident on the first surface, and the light beams propagate and leave the optical element from the second surface.

4. The optical element of claim 1, wherein the holographic pinhole grating sets are volume holographic gratings, surface relief diffraction gratings or liquid crystal gratings.

5. The optical element of claim 1, wherein the light diffracted by the holographic pinhole grating sets is collimated light.

6. The optical element of claim 1, wherein the light diffracted by the holographic pinhole grating sets has another field of view.

7. An optical device, comprising:
an optical element comprising a holographic pinhole array, wherein the holographic pinhole array comprises a plurality of holographic pinhole grating sets; and
a light-emitting element configured to emit light toward the optical element,
wherein the holographic pinhole grating sets are configured to diffract the light into a plurality of light beams respectively, and each of the light beams has a field of view.

8. The optical device of claim 7, wherein the optical element has a surface, the light diffracted by the holographic pinhole grating sets is incident on the surface, and the light beams propagate and leave the optical element from the surface.

9. The optical device of claim 7, wherein the optical element has a first surface and a second surface opposite to each other, the light diffracted by the holographic pinhole grating sets is incident on the first surface, and the light beams propagate and leave the optical element from the second surface.

10. The optical device of claim 7, wherein the holographic pinhole grating sets are volume holographic gratings, surface relief diffraction gratings or liquid crystal gratings.

11. The optical device of claim 7, wherein the light diffracted by the holographic pinhole grating sets is collimated light.

12. The optical device of claim 11, further comprising a temple connected to an edge of the optical element, wherein the light-emitting element is disposed on a side of the temple adjacent to the optical element.

13. The optical device of claim 11, wherein the light-emitting element comprises:
a projector; and
a lens module optically coupled between the projector and the optical element.

14. The optical device of claim 7, wherein the light diffracted by the holographic pinhole grating sets has another field of view.

15. The optical device of claim 14, further comprising a temple connected to an edge of the optical element, wherein the light-emitting element is disposed on a side of the temple adjacent to the optical element and comprises:
a display; and
a field lens optically coupled between the display and the optical element.
